# EUROPÄISCHE PATENTANMELDUNG

(11) **EP 4 401 265 A1**
(43) Veröffentlichungstag der Anmeldung: **17.07.2024**
(21) Anmeldenummer: 23151358.1
(22) Anmeldetag: 12.01.2023
(51) Int. Cl.: H02J 3/28, H02J 3/38

(54) **OPTIMIERTER BETRIEB EINER ELEKTROLYSEANLAGE UND EINES ELEKTRISCHEN ENERGIESPEICHERS**

(71) Anmelder: Primetals Technologies Germany GmbH, 91058 Erlangen (DE)
(72) Erfinder: Becker, Gerd, 91080 Marloffstein (DE); Weinzierl, Klaus, 90480 Nürnberg (DE)
(74) Vertreter: Metals@Linz

(57) **Zusammenfassung**

Ein Gesamtsystem umfasst als Teilsysteme eine Wasserstoff produzierende Elektrolyseanlage (1) und einen elektrischen Energiespeicher (2). Die beiden Teilsysteme (1, 2) sind zur Übertragung elektrischer Energie direkt oder indirekt miteinander und mit einem elektrischen Versorgungsnetz (5) verbunden. Einer Steuereinrichtung (6) sind aktuelle Zustände (Z1, Z2) der Teilsysteme (1, 2) sowie für einen Prognosehorizont (PH) zumindest ein gewünschter Produktionsplan (PP) der Elektrolyseanlage (1) und mindestens ein erwarteter Preis (P) für aus dem Versorgungsnetz (5) bezogene elektrische Energie bekannt. Die Steuereinrichtung (6) setzt für den Prognosehorizont (PH) Betriebsweisen (B1, B2) der Teilsysteme (1, 2) an und ermittelt für das Ende des Prognosehorizonts (PH) erwartete finale Zustände (Z1', Z2') der Teilsysteme (1, 2). Die Steuereinrichtung (6) ermittelt die erwarteten finalen Zustände (Z1', Z2') der Teilsysteme (1, 2) unter Verwertung der aktuellen Zustände (Z1, Z2) der Teilsysteme (1, 2) und der angesetzten Betriebsweisen (B1, B2). Die Steuereinrichtung (6) variiert für den Prognosehorizont (PH) die angesetzten Betriebsweisen (B1, B2) und hierauf aufbauend die erwarteten finalen Zustände (Z1', Z2'), so dass eine Kostenfunktion (K) minimiert wird. In die Kostenfunktion (K) gehen die Kosten für den Bezug elektrischer Energie aus dem Versorgungsnetz (5), die Betriebsweisen (B1, B2) der Teilsysteme (1, 2), eine Bewertung der erwarteten finalen Zustände (Z1', Z2') der Teilsysteme (1, 2) und/oder eine Produktivität der Elektrolyseanlage (1) ein. Die Steuereinrichtung (6) betreibt die Teilsysteme 1, 2) zumindest für den Beginn des Prognosehorizonts (PH) gemäß der variierten Betriebsweisen (B1, B2).

## Beschreibung

### Gebiet der Technik

Die vorliegende Erfindung geht aus von einem Betriebsverfahren für ein Gesamtsystem, das mehrere Teilsysteme umfasst,
- wobei das Gesamtsystem als Teilsysteme eine Wasserstoff produzierende Elektrolyseanlage und einen elektrischen Energiespeicher umfasst,
- wobei die Elektrolyseanlage und der elektrische Energiespeicher zur Übertragung elektrischer Energie direkt oder indirekt miteinander und mit einem elektrischen Versorgungsnetz verbunden sind,
- wobei einer das Gesamtsystem steuernden Steuereinrichtung aktuelle Zustände der Teilsysteme bekannt sind.

Die vorliegende Erfindung geht weiterhin aus von einem Steuerprogramm für eine Steuereinrichtung für ein Gesamtsystem,
- wobei das Gesamtsystem als Teilsysteme eine Wasserstoff produzierende Elektrolyseanlage und einen Energiespeicher umfasst,
- wobei die Elektrolyseanlage und der elektrische Energiespeicher zur Übertragung elektrischer Energie direkt oder indirekt miteinander und mit einem elektrischen Versorgungsnetz verbunden sind,
- wobei das Steuerprogramm Maschinencode umfasst, der von der Steuereinrichtung abarbeitbar ist,
- wobei die Abarbeitung des Maschinencodes durch die Steuereinrichtung bewirkt, dass die Steuereinrichtung das Gesamtsystem gemäß einem derartigen Betriebsverfahren steuert.

Die vorliegende Erfindung geht weiterhin aus von einer Steuereinrichtung für ein Gesamtsystem,
- wobei das Gesamtsystem als Teilsysteme eine Wasserstoff produzierende Elektrolyseanlage und einen Energiespeicher umfasst,
- wobei die Elektrolyseanlage und der elektrische Energiespeicher zur Übertragung elektrischer Energie direkt oder indirekt miteinander und mit einem elektrischen Versorgungsnetz verbunden sind,
- wobei die Steuereinrichtung mit einem derartigen Steuerprogramm programmiert ist, so dass die Steuereinrichtung bei Abarbeitung des Maschinencodes des Steuerprogramms das Gesamtsystem gemäß einem derartigen Betriebsverfahren steuert.

Die vorliegende Erfindung geht weiterhin aus von einem Gesamtsystem,
- wobei das Gesamtsystem als Teilsysteme eine Wasserstoff produzierende Elektrolyseanlage und einen Energiespeicher umfasst,
- wobei die Elektrolyseanlage und der elektrische Energiespeicher zur Übertragung elektrischer Energie direkt oder indirekt miteinander und mit einem elektrischen Versorgungsnetz verbunden sind,
- wobei das Gesamtsystem eine derartige Steuereinrichtung umfasst, die bei Abarbeitung des Maschinencodes eines derartigen Steuerprogramms das Gesamtsystem gemäß einem derartigen Betriebsverfahren steuert.

### Stand der Technik

Aus der US 8 288 888 B2 ist eine Elektrolyseanlage bekannt, die aus einem Windpark gespeist wird. Schwankungen der Lieferung an elektrischer Energie aus dem Windpark werden durch Anpassung des Betriebs der Elektrolyseanlage und/oder Anpassung des Betriebs alternativer Lasten und/oder oder alternativer Energiequellen ausgeglichen. Die alternativen Lasten und die alternativen Energiequellen können Batterien sein. Bei der Ansteuerung der alternativen Lasten und Energiequellen wird die Stromsteuerung der Elektrolysemodule berücksichtigt.

Aus dem Aufsatz "Grüne Energieversorgung der Stahlindustrie", Stahl und Eisen, August 2022, Seiten 22 bis 24, ist ein Gesamtsystem bekannt, das als Teilsysteme unter anderem eine Wasserstoff produzierende Elektrolyseanlage und einen Energiespeicher umfasst. Die Elektrolyseanlage und der elektrische Energiespeicher sind zur Übertragung elektrischer Energie direkt oder indirekt miteinander und mit einem elektrischen Versorgungsnetz verbunden. Das Gesamtsystem wird von einer Steuereinrichtung gesteuert. Der Steuereinrichtung sind aktuelle Zustände der Teilsysteme bekannt.

### Zusammenfassung der Erfindung

Wasserstoff wird - teilweise bereits heute, teilweise zukünftig - in sehr vielen Industriebereichen eingesetzt. Beispiele sind Raffinerien, Düngemittelfabriken, Chemieanlagen und auch die Stahl- und Metallindustrie. Beispielsweise wird in der Stahlindustrie in erheblichem Umfang Wasserstoff benötigt, um bei der Direktreduktion aus Eisenerz Roheisen herstellen zu können, ohne hierbei Kohlendioxid zu erzeugen.

Für die Elektrolyse sind heutzutage drei großtechnisch anwendbare Verfahren bekannt. Diese Verfahren sind die alkalische Elektrolyse, die PEM-Elektrolyse und die Hochtemperatur-Elektrolyse.

Bei der alkalischen Elektrolyse wird durch Stromfluss über eine Kaliumhydroxid-Lösung Wasser in Wasserstoff und Sauerstoff aufgespalten. Der Prozess läuft bei einer Temperatur von ca. 80 °C. Das Verfahren ist relativ preisgünstig. Eine schnelle Stromänderung ist jedoch nicht ohne weiteres möglich. Weiterhin ist bei einer kalten Kaliumhydroxid-Lösung der Widerstand größer und damit der Wirkungsgrad schlechter. Weiterhin wirkt sich jede Stromänderung auch auf die Temperatur der Kaliumhydroxid-Lösung aus. In der Praxis kann die Leistung bei der alkalischen Elektrolyse daher nur in einem Bereich zwischen ca. 50 % und 100 % eingestellt werden. Weiterhin benötigt man nach einer Abschaltung eine Phase für die Wiedererwärmung der Kaliumhydroxid-Lösung.

Bei der PEM-Elektrolyse besteht der Elektrolyseur aus einer protonendurchlässigen Polymermembran, die kathodenseitig mit einer porösen Elektrode aus auf Kohlenstoff geträgertem Platin und anodenseitig mit metallischen oder als Oxid vorliegenden Edelmetallen (beispielsweise Iridium) beschichtet ist. Auf der Anodenseite wird Wasser zersetzt. Es entstehen Sauerstoff sowie positiv geladene Wasserstoff-Ionen. Letztere wandern durch die Membran auf die Kathodenseite, wo sie sich mit Elektronen zu freiem Wasserstoff kombinieren. Dieser Prozess ist schneller regelbar und auch in einem weiten Bereich einstellbar. Er ist jedoch etwas kostenintensiver.

Bei der Hochtemperatur-Elektrolyse wird mit Temperaturen von mehreren 100 °C gearbeitet, beispielsweise bei 500 °C bis 600 °C. Ein Teil der benötigten Energie wird in Form von Wärme zugeführt. Dadurch wird der Strombedarf verringert. Dieses Verfahren ist insbesondere dann geeignet, wenn von einer anderen Anlage - beispielsweise einem Stahlwerk - Abwärme verfügbar ist, die anderenfalls nicht genutzt werden könnte. Die elektrische Regelbarkeit ist noch etwas mehr eingeschränkt als bei der PEM-Elektrolyse, weil als Separator eine Keramik, Yttriumstabilisiertes Zirkoniumoxid, verwendet wird. Dieses sollte möglichst immer auf hoher Temperatur bleiben. Wenn es abkühlt, durchläuft es eine Phasenumwandlung, wodurch sich Risse bilden können. Daher ist eine Regelung typischerweise nur in einem Bereich zwischen 70 und 100% möglich.

Die Elektrolyseanlage benötigt Gleichstrom. Eine Anbindung der Elektrolyseanlage an das Versorgungsnetz, das üblicherweise als Drehstromnetz ausgebildet ist, erfolgt über eine Umrichtereinheit.

Batteriespeicher sind seit langem bekannt. Sie werden dazu benutzt, elektrische Energie temporär zu puffern. Ein derartiger Batteriespeicher wird geladen, wenn die elektrische Energie reichlich vorhanden und daher günstig ist, und entladen, wenn die elektrische Energie in geringerem Umfang vorhanden und daher teurer ist. Auch hier wird eine Umrichtereinheit benötigt, die den Batteriespeicher mit dem Versorgungsnetz verbindet.

Die Aufgabe der vorliegenden Erfindung besteht darin, Möglichkeiten zu schaffen, mittels derer der Betrieb der Elektrolyseanlage und der Betrieb des Batteriespeichers gemeinsam optimiert werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet,
- dass der Steuereinrichtung für einen Prognosehorizont zumindest ein gewünschter Produktionsplan der Elektrolyseanlage und mindestens ein erwarteter Preis für aus dem Versorgungsnetz bezogene elektrische Energie bekannt sind,
- dass die Steuereinrichtung für den Prognosehorizont Betriebsweisen der Teilsysteme ansetzt und für das Ende des Prognosehorizonts erwartete finale Zustände der Teilsysteme ermittelt,
- dass die Steuereinrichtung den erwarteten finalen Zustand eines jeweiligen Teilsystems unter Verwertung des aktuellen Zustands des jeweiligen Teilsystems und der für das jeweilige Teilsystem angesetzten Betriebsweise ermittelt,
- dass die Steuereinrichtung für den Prognosehorizont die angesetzten Betriebsweisen und hierauf aufbauend die erwarteten finalen Zustände variiert, so dass eine Kostenfunktion minimiert wird,
- dass in die Kostenfunktion die Kosten für den Bezug elektrischer Energie aus dem Versorgungsnetz, die Betriebsweisen der Teilsysteme, eine Bewertung der erwarteten finalen Zustände der Teilsysteme und/oder eine Produktivität der Elektrolyseanlage eingehen und
- dass die Steuereinrichtung die Teilsysteme zumindest für den Beginn des Prognosehorizonts gemäß der jeweiligen variierten Betriebsweise betreibt.

Der aktuelle Zustand der Elektrolyseanlage kann beispielsweise deren Auslastung und deren Temperatur umfassen. Er kann auch andere Größen umfassen, beispielsweise Konzentrationen eines Elektrolyten (beispielsweise Kaliumhydroxid) in einer wässrigen Lösung. In analoger Weise kann der aktuelle Zustand des elektrischen Energiespeichers dessen Ladezustand (prozentual und/oder absolut), dessen Temperatur und den aktuellen Stromfluss umfassen. Auch Verschleißzustände wie beispielsweise die Anzahl an Betriebsstunden und der tatsächlich aufgelaufene Verschleiß können mit umfasst sein. Der Zustand des elektrischen Energiespeichers kann weiterhin prinzipiell maximal mögliche und momentan maximal mögliche Betriebsgrößen umfassen, beispielsweise Lade- und Entladeströme.

Der Produktionsplan der Elektrolyseanlage kann insbesondere festlegen, zu welchen Zeiträumen wieviel Wasserstoff produziert werden soll. Der Produktionsplan kann gegebenenfalls auch einen Rahmen vorgeben, also Mindestmengen und Maximalmengen an Wasserstoff festlegen, die produziert werden müssen bzw. dürfen.

Der erwartete Preis für aus dem Versorgungsnetz bezogene elektrische Energie kann für verschiedene Zeiträume auf jeweils individuell verschiedene Art und Weise festgelegt werden. An einem Spotmarkt steht der Preis oftmals nur für einen relativ begrenzten Zeitraum fest, beispielsweise nur 24 Stunden im Voraus. Hier werden bestimmte Strommengen für feste Zeiträume zu einem jeweiligen Spotmarktpreis gehandelt. Es gibt jedoch auch Verträge mit längerfristigen Bindungen, beispielsweise einen festen Preis für ein bestimmtes Leistungsniveau auf ein Jahr im Voraus. Die beiden Beispiele sind natürlich nicht die einzig möglichen.

Oftmals weicht weiterhin die Abrechnung des tatsächlichen Leistungsbezugs aus dem Versorgungsnetz von einem zuvor vereinbarten Tarif ab, sofern eine andere als die zuvor gekaufte Leistungsmenge bezogen wird. So wird beispielsweise der Strombezug vom Spotmarkt zwar stundenweise gekauft, die Abrechnung erfolgt jedoch viertelstundenweise. Wird die zuvor gekaufte Strommenge bezogen, wird auch der vereinbarte Tarif abgerechnet. Wird hingegen mehr oder weniger Strom bezogen, als zuvor am Spotmarkt gekauft wurde, hängt der tatsächliche Preis für aus dem Versorgungsnetz bezogene elektrische Energie von einer Vielzahl von Faktoren ab. In den tatsächlichen Preis geht insbesondere ein, ob und gegebenenfalls mit welchem Aufwand der Betreiber des Versorgungsnetzes zusätzlich bezogene elektrische Energie beschaffen musste oder ob und gegebenenfalls mit welchem Aufwand der Betreiber des Versorgungsnetzes gekaufte, aber nicht bezogene elektrische Energie anderweitig verwerten konnte. Derartige Sachverhalte bewegen sich außerhalb der Einflusssphäre des Käufers. Bezüglich derartiger Sachverhalte können daher lediglich vernünftige Schätzungen erfolgen. Eine exakte vorherige Berechnung ist hingegen nicht möglich.

Über Zeiträume hinaus, für welche der erwartete Preis für aus dem Versorgungsnetz bezogene elektrische Energie als solcher bekannt ist, können weiterhin aufgrund von Erfahrungswerten gewisse Schätzungen vorgenommen werden.

In jedem Fall besteht die Möglichkeit, dass der erwartete Preis für aus dem Versorgungsnetz bezogene elektrische Energie kein einfacher Skalar ist, sondern ein Vektor, der mehrere Größen umfasst. Weiterhin besteht stets auch die Möglichkeit, dass der Preis für aus dem Versorgungsnetz bezogene elektrische Energie nicht ein fester, exakt bestimmter Wert ist, sondern eine gewisse Preisspanne abdeckt.

All diese und gegebenenfalls auch weitere Sachverhalte können in Daten für den Preis für aus dem Versorgungsnetz bezogene elektrische Energie enthalten sein. Weiterhin ist es möglich, dass die Daten den Preis nur indirekt bestimmen. Ein Beispiel derartiger Daten ist eine Wettervorhersage, da das Ausmaß an Sonnenschein (Stromerzeugung durch Photovoltaik) und das Ausmaß an Wind (Stromerzeugung mittels Windkraftanlagen) direkten Einfluss auf die Menge an erzeugter und damit verfügbarer elektrischer Energie und folglich auf den Preis für aus dem Versorgungsnetz bezogene elektrische Energie haben. Darüber hinaus kann der erwartete Preis auch von weiteren Sachverhalten abhängen, beispielsweise der Menge an bezogener Wirkleistung, der bezogenen Blindleistung, der Anteile an Oberschwingungen in der bezogenen elektrischen Energie und dem Anteil an Unsymmetrien zwischen den verschiedenen Phasen des Versorgungsnetzes.

Die Betriebsweisen der Teilsysteme sind - insbesondere für die Elektrolyseanlage - etwas anderes als der Produktionsplan. Konkret definiert die Betriebsweise der Elektrolyseanlage für jeden Zeitpunkt, wie die Elektrolyseanlage betrieben (= gesteuert) wird. Analoges gilt für die Betriebsweise des Energiespeichers. Die Betriebsweisen sind in zeitlicher Hinsicht kontinuierlich ("um 17:52:43 Uhr werden die Teilsysteme im Ansteuerungszustand A betrieben, um 17:52:44 Uhr im Ansteuerungszustand B, um 17:52:45 Uhr im Ansteuerungszustand C" usw.). Die Betriebsweisen müssen natürlich derart festgelegt sein, dass die Vorgaben des Produktionsplans erfüllt werden. Die Betriebsweise der Elektrolyseanlage legt fest, in welchem Ausmaß von der Elektrolyseanlage Strom benötigt und mittels der Elektrolyseanlage Wasserstoff produziert wird. Die Betriebsweise des Energiespeichers legt fest, in welchem Ausmaß von dem Energiespeicher elektrische Energie aufgenommen bzw. abgegeben wird.

Das Variieren der angesetzten Betriebsweisen mit dem Ziel der Minimierung der Kostenfunktion ist ein typisches Optimierungsproblem. Optimierungsprobleme als solche, die Art und Weise, auf welche Optimierungsprobleme angesetzt werden, und die Art und Weise, auf welche Optimierungsprobleme gelöst werden, ist Fachleuten bekannt. Rein beispielhaft kann auf
- Fletcher, R.: Practical Methods on Optimization. 2nd ed., John Wiley Inc., Cichester, New York 1987,
- Hintermüller, M.; Stadler, G.: A semi-smooth Newton methods for linear-quadratic control problems, Zeitschrift für angewandte Mathematik und Mechanik (ZAMM) 83-4, 219 - 237, (2003) oder
- Ito, K.; Kunisch, K.: Semi-smooth Newton methods for state-constrained optimal control problems, Systems and Control Letters, 50, 221 - 228, (2003)
verwiesen werden. Aus der genannten Fundstelle ist auch bekannt, auf welche Art und Weise einzuhaltende Randbedingungen formuliert werden können, beispielsweise Leistungsgrenzen der Elektrolyseanlage und/oder des elektrischen Energiespeichers. Aus der genannten Fundstelle ist weiterhin auch bekannt, auf welche Art und Weise Abweichungen von bevorzugten Betriebszuständen "bestraft" werden können.

Vorzugsweise berücksichtigt die Steuereinrichtung beim Variieren der Betriebsweisen einen minimalen und einen maximalen Ladezustand des elektrischen Energiespeichers und/oder einen mittleren Ladezustand des elektrischen Energiespeichers. Durch die Berücksichtigung derartiger Größen - sei es als zu beachtende Randbedingungen, sei es durch direktes Eingehen in die Kostenfunktion - kann erreicht werden, dass der elektrische Energiespeicher jederzeit und in beide Richtungen - sowohl zum Aufnehmen von elektrischer Energie als auch zum Abgeben von elektrischer Energie - eine gewisse Kapazität aufweist, so dass auf Störungen beim Betrieb der Elektrolyseanlage - gegebenenfalls auch bei Störungen des Versorgungsnetzes oder anderen Störungen - durch eine geänderte Betriebsweise des elektrischen Energiespeichers reagiert werden kann.

Der Begriff "Kostenfunktion" hat für den Fachmann auf dem Gebiet von Optimierungsproblemen eine fest umrissene Bedeutung. Sie kann zwar im Sinne einer wirtschaftlichen Bewertung gemeint sein. Dies ist aber nicht notwendigerweise der Fall. Vorliegend können in die Kostenfunktion verschiedene Größen eingehen.

Die Kosten für den Bezug elektrischer Energie sind selbsterklärend. Es wird lediglich darauf hingewiesen, dass die Kosten im Einzelfall negativ sein können, nämlich dann, wenn aus dem elektrischen Energiespeicher elektrische Energie in das Versorgungsnetz zurückgespeist wird.

Die Betriebsweisen der Teilsysteme können auf verschiedene Art und Weise bewertet werden, beispielsweise im Sinne von gut oder schlecht oder auch im Sinne von kostengünstig oder teuer. Gleiches gilt für die Bewertung der erwarteten finalen Zustände der Teilsysteme. Weiterhin kann die Bewertung des erwarteten finalen Zustands der Elektrolyseanlage einen Anteil umfassen, der unter Verwertung eines energetischen Zustands der Elektrolyseanlage ermittelt wird. Dies kann insbesondere bei einer Hochtemperatur-Elektrolyse sinnvoll sein. Die Produktivität der Elektrolyseanlage kann als proportional zu der Menge an produziertem Wasserstoff angesehen werden.

Es ist möglich, dass das Gesamtsystem als Teilsysteme ausschließlich die Elektrolyseanlage und den elektrischen Energiespeicher aufweist. Ebenso kann das Gesamtsystem aber auch weitere Teilsysteme umfassen, die elektrische Energie und/oder Wasserstoff erzeugen oder verbrauchen. Beispiele derartiger Teilsysteme sind eine Anlage der Stahlindustrie und/oder eine Stromerzeugungseinrichtung zum Erzeugen regenerativer Energie. Das Gesamtsystem kann auch Teilsysteme umfassen, bei denen der elektrische Energieverbrauch von sekundärer Bedeutung ist. Ein Beispiel eines derartigen Teilsystems ist ein Wasserstoffspeicher. Wenn ein Wasserstoffspeicher vorhanden ist, ist ein erheblich flexiblerer Betrieb der Elektrolyseanlage möglich, da der Bedarf an Wasserstoff und die Produktion von Wasserstoff in gewissem Umfang voneinander entkoppelt werden können.

Bei einem Wasserstoffspeicher besteht das Problem, dass Wasserstoff unkontrolliert entweicht. Die Verluste an Wasserstoff können bei bis zu 0,5 % der gespeicherten Menge an Wasserstoff pro Tag liegen. Vorzugsweise gehen daher in die Kostenfunktion gegebenenfalls auch Verluste an im Wasserstoffspeicher befindlichem Wasserstoff ein.

Vorzugsweise umfassen der aktuelle Zustand und der erwartete finale Zustand der Elektrolyseanlage die Auslastung, die Temperatur und/oder den Verschleiß der Elektrolyseanlage. In analoger Weise umfassen der aktuelle Zustand und der erwartete finale Zustand des elektrischen Energiespeichers vorzugsweise dessen Ladezustand, den Stromfluss, die Temperatur und/oder den Verschleiß des elektrischen Energiespeichers.

Der Produktionsplan der Elektrolyseanlage umfasst in der Regel zumindest die Menge des zu produzierenden Wasserstoffs, vorzugsweise auch die Reinheit des zu produzierenden Wasserstoffs.

In der Regel implementiert die Steuereinrichtung Modelle der Teilsysteme. Vorzugsweise modellieren die Modelle der Teilsysteme die Energieeffizienz und den Verschleiß des jeweiligen Teilsystems, insbesondere den durch den geplanten Betrieb des jeweiligen Teilsystems bewirkten Verschleiß des jeweiligen Teilsystems. In diesem Fall kann die Steuereinrichtung bei der Bewertung des erwarteten finalen Zustands dieser Teilsysteme den durch den geplanten Betrieb des jeweiligen Teilsystems bewirkten Verschleiß berücksichtigen.

Die Energieeffizienz und der Verschleiß können insbesondere vom jeweiligen Betriebszustand abhängig sein, beispielsweise beim elektrischen Energiespeicher vom Ladezustand, der Temperatur und dem Stromfluss und bei der Elektrolyseanlage vom Auslastungsgrad, der Temperatur und der Konzentration eines Elektrolyten.

Vorzugsweise sind der Steuereinrichtung für die Teilsysteme der Wirkungsgrad, gegebenenfalls in Abhängigkeit vom Betriebszustand, die maximale Kapazität und die maximal mögliche Änderungsgeschwindigkeit des Betriebs bekannt. Dadurch ist eine besonders hochwertige Modellierung möglich.

Vorzugsweise ist vorgesehen, dass die Elektrolyseanlage mehrere Elektrolysenblöcke aufweist, dass der elektrische Energiespeicher mehrere Batteriemodule aufweist, dass die Batteriemodule über eine jeweilige Wandlerschaltung mit je einem der Elektrolysenblöcke verbunden sind und dass die Elektrolysenblöcke oder die Batteriemodule eine Reihenschaltung bilden, die über eine Umrichtereinheit mit dem Versorgungsnetz verbunden ist. Diese Ausgestaltung ist schaltungstechnisch einfach zu realisieren und sehr effizient. Insbesondere kann die Elektrolyseanlage in den Batteriespeicher oder kann umgekehrt der Batteriespeicher in die Elektrolyseanlage integriert werden. Hierbei kann auch ausgenutzt werden, dass die Betriebsspannung einzelner Elektrolysezellen und einzelner Batteriezellen in einer ähnlichen Größenordnung liegt, nämlich im unteren einstelligen Voltbereich.

Vorzugsweise sind die Elektrolysenblöcke jeweils als Parallelschaltung einer Anzahl von Elektrolysensträngen ausgebildet, die ihrerseits jeweils als Reihenschaltung mehrerer Elektrolysezellen ausgebildet sind. Dadurch können die Kapazität und die Leistungsfähigkeit der Elektrolysenblöcke nach Bedarf skaliert werden.

Vorzugsweise weisen die Batteriemodule jeweils eine Reihenschaltung von mehreren Batterieblöcken auf, die ihrerseits jeweils eine Parallelschaltung einer Anzahl von Batteriezellen aufweisen. Dadurch können die Kapazität und die Leistungsfähigkeit der Batteriemodule nach Bedarf skaliert werden.

Vorzugsweise weisen die Batteriemodule jeweils eine Balancierschaltung auf, die innerhalb der in Reihe geschalteten Batterieblöcke des jeweiligen Batteriemoduls einen Ausgleich der Ladezustände der Batterieblöcke des jeweiligen Batteriemoduls bewirkt.

Derartige Balancierschaltungen sind als solche bekannt. Rein beispielhaft kann in der deutschen Wikipedia auf den Eintrag https://de.wikipedia.org/wiki/Balancer und in der englischen Wikipedia auf den Eintrag https://en.wikipedia.org/wiki/Battery_balancing verwiesen werden.

Für die Batterieblöcke selbst sind keine Balancierschaltungen erforderlich. Denn innerhalb des jeweiligen Batterieblocks gleichen sich die Ladezustände der einzelnen Batteriezellen von selbst an. Auch für die Elektrolysenblöcke sind keine Balancierschaltungen erforderlich. Denn es ist unerheblich, ob eine bestimmte Elektrolysezelle etwas mehr Wasserstoff produziert als eine andere Elektrolysezelle.

Die Wandlerschaltungen können nach Bedarf als Synchronwandler, als Aufwärtswandler oder als Abwärtswandler ausgebildet sein. Ein Synchronwandler weist den Vorteil auf, dass er einen bidirektionalen Energieaustausch ermöglicht. Aufwärtswandler und Abwärtswandler ermöglichen zwar nur einen unidirektionalen Energiefluss, sind aber kostengünstiger zu realisieren und einfacher zu betreiben. Wandlerschaltungen der genannten Art und deren Betrieb sind Fachleuten wohlbekannt. Auch hier finden sich beispielsweise Einträge in der deutschen und in der englischen Wikipedia.

Die Aufgabe wird weiterhin durch ein Steuerprogramm mit den Merkmalen des Anspruchs 13 gelöst. Erfindungsgemäß bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 14 gelöst. Erfindungsgemäß ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 15 gelöst. Erfindungsgemäß ist die Steuereinrichtung als erfindungsgemäße Steuereinrichtung ausgebildet, die bei Abarbeitung des Maschinencodes des Steuerprogramms das Gesamtsystem gemäß einem erfindungsgemäßen Betriebsverfahren steuert.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Gesamtsystem,
- FIG 2: ein Ablaufdiagramm,
- FIG 3: eine Elektrolyseanlage und einen Energiespeicher,
- FIG 4: eine Elektrolyseanlage und einen Energiespeicher,
- FIG 5: einen Elektrolysenblock,
- FIG 6: ein Batteriemodul,
- FIG 7: eine Wandlerschaltung,
- FIG 8: eine alternative Wandlerschaltung und
- FIG 9: eine weitere alternative Wandlerschaltung.

### Beschreibung der Ausführungsformen

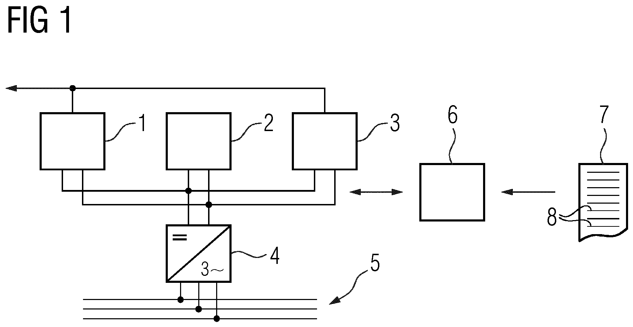

Gemäß FIG 1 umfasst ein Gesamtsystem als ein Teilsystem eine Elektrolyseanlage 1. Die Elektrolyseanlage 1 produziert im Betrieb Wasserstoff. Das Gesamtsystem umfasst ferner als weiteres Teilsystem einen elektrischen Energiespeicher 2.

Das Gesamtsystem kann weitere Teilsysteme umfassen, beispielsweise eine Anlage der Stahlindustrie oder allgemein eine Elektrizität und/oder Wasserstoff verbrauchende Anlage (nicht dargestellt). In vielen Fällen umfasst das Gesamtsystem weiterhin als weiteres Teilsystem einen Wasserstoffspeicher 3. Der Wasserstoffspeicher 3 kann als Speicher im engeren Sinne ausgebildet sein, also als dedizierter Wasserstoffspeicher. Auch das Leitungsnetz, über das Wasserstoff transportiert wird, weist jedoch eine gewisse Speicherkapazität auf und kann als Wasserstoffspeicher 3 im Sinne der vorliegenden Erfindung dienen. Im Falle eines eigenen, dedizierten Speichers kann der Wasserstoffspeicher 3 alternativ überirdisch oder unterirdisch angeordnet sein. Der Wasserstoffspeicher 3 ist zum Aufnehmen von Wasserstoff direkt oder indirekt mit der Elektrolyseanlage 1 verbunden und zum Abgeben von Wasserstoff direkt oder indirekt mit einer Wasserstoff verbrauchenden Anlage verbunden. Dies ist in FIG 1 durch die Verbindungslinie oberhalb der Elektrolyseanlage 1 und des Wasserstoffspeichers 3 angedeutet. Aufgrund des Wasserstoffspeichers 3 ist der Betrieb der Elektrolyseanlage 1 - insbesondere im Zusammenwirken mit der Wasserstoff verbrauchenden Anlage - flexibler gestaltbar.

Die Elektrolyseanlage 1 und der elektrische Energiespeicher 2 (und gegebenenfalls auch die weiteren Teilsysteme, beispielsweise der Wasserstoffspeicher 3) sind zur Übertragung elektrischer Energie direkt oder indirekt miteinander verbunden. Sie sind weiterhin - in der Regel über eine gemeinsame Umrichtereinheit 4, alternativ über eigene Umrichtereinheiten - mit einem elektrischen Versorgungsnetz 5 verbunden. Zwischen der Umrichtereinheit 4 und dem elektrischen Versorgungsnetz 5 können weitere Umrichtereinheiten angeordnet sein. Die Umrichtereinheit 4 ist vorzugsweise derart ausgebildet, dass über sie die Spannung einstellbar ist, die an die Elektrolyseanlage 1 und den Energiespeicher 2 angelegt wird.

Das Versorgungsnetz 5 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.

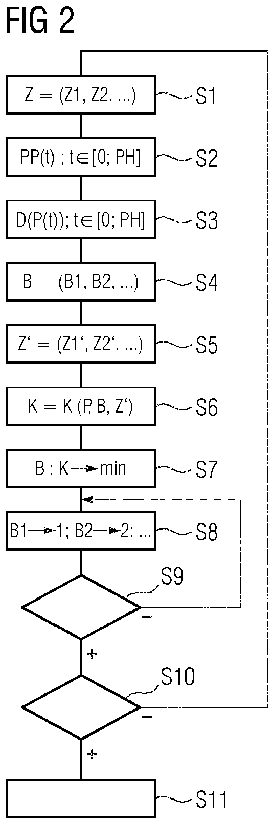

Das Gesamtsystem umfasst weiterhin eine Steuereinrichtung 6. Die Steuereinrichtung 6 ist mit einem Steuerprogramm 7 programmiert. Das Steuerprogramm 7 umfasst Maschinencode 8, der von der Steuereinrichtung 6 abarbeitbar ist. Aufgrund der Programmierung mit dem Steuerprogramm 7 arbeitet die Steuereinrichtung 6 den Maschinencode 8 ab. Die Abarbeitung des Maschinencodes 8 durch die Steuereinrichtung 6 bewirkt, dass die Steuereinrichtung 6 das Gesamtsystem gemäß einem Betriebsverfahren steuert, das nachstehend in Verbindung mit FIG 2 näher erläutert wird.

Gemäß FIG 2 wird der Steuereinrichtung 6 in einem Schritt S1 ein aktueller Zustand Z des Gesamtsystems bekannt. Der aktuelle Zustand Z umfasst für die Elektrolyseanlage 1 und den Energiespeicher 2 jeweils einen aktuellen Teilzustand Z1, Z2. Sofern weitere Teilsysteme vorhanden sind, umfasst der Zustand Z auch für diese Teilsysteme jeweils einen aktuellen Teilzustand.

Der Teilzustand Z1 für die Elektrolyseanlage 1 - nachfolgend auch als Anlagenzustand Z1 bezeichnet - kann beispielsweise eine Auslastung und/oder eine Temperatur der Elektrolyseanlage 1 und/oder eine chemische Zusammensetzung der Elektrolyseflüssigkeit der Elektrolyseanlage 1 und/oder einen Verschleißzustand der Elektrolyseanlage 1 umfassen.

Der Teilzustand Z2 für den Energiespeicher 2 - nachfolgend auch als Speicherzustand Z2 bezeichnet - umfasst zumindest den Ladezustand des Energiespeichers 2, also das Ausmaß, zu dem der Energiespeicher 2 geladen ist. Der Speicherzustand Z2 kann auch weitere Größen umfassen, beispielsweise eine Temperatur des Energiespeichers 2 oder einen maximal möglichen oder zulässigen Lade- und Entladestrom. Weiterhin kann der Speicherzustand Z2 den aktuellen Stromfluss und/oder einen Verschleißzustand des Energiespeichers 2 umfassen.

Falls der Wasserstoffspeicher 3 vorhanden ist, umfasst der zugehörige Teilzustand zumindest den Füllstand des Wasserstoffspeichers 3, also das Ausmaß, zu dem der Wasserstoffspeicher 3 gefüllt ist. Der zugehörige Teilzustand kann auch weitere Größen umfassen, beispielsweise eine Temperatur des Wasserstoffspeichers 3 oder einen maximal möglichen oder zulässigen Fluss an Wasserstoff beim Füllen und Entleeren des Wasserstoffspeichers 3.

Ähnliche Sachverhalte gelten für die Zustände der weiteren Teilsysteme des Gesamtsystems.

In einem Schritt S2 wird der Steuereinrichtung 6 ein gewünschter Produktionsplan PP der Elektrolyseanlage 1 bekannt. Beispielsweise kann der Produktionsplan PP der Steuereinrichtung 6 von einer Bedienperson (nicht dargestellt) vorgegeben werden. Der Produktionsplan PP legt als Funktion der Zeit t fest, in welchem Ausmaß und gegebenenfalls auch mit welchem Reinheitsgrad mittels der Elektrolyseanlage 1 Wasserstoff produziert werden soll. Der Produktionsplan PP erstreckt sich über einen Prognosehorizont PH. Der Prognosehorizont PH liegt in aller Regel mindestens bei mehreren Stunden, oftmals sogar im Bereich von mehreren Tagen. Der Produktionsplan PP kann unter Umständen auch durch einen Produktionsplan für weitere Teilsysteme des Gesamtsystems bestimmt sein, sofern diese Teilsysteme Wasserstoff verbrauchen.

In einem Schritt S3 werden der Steuereinrichtung 6 Daten D bekannt, durch die für den Prognosehorizont PH mindestens ein erwarteter Preis P für elektrische Energie bestimmt ist, soweit die elektrische Energie aus dem Versorgungsnetz 5 bezogen wird. Der erwartete Preis P ist zumindest als Funktion der Zeit t definiert. Der erwartete Preis P kann von weiteren Sachverhalten abhängen, beispielsweise von der Menge an aus dem Versorgungsnetz 5 bezogener elektrischer Energie. Auch wird in das Versorgungsnetz 5 rückgespeiste elektrische Energie oftmals anders verrechnet als aus dem Versorgungsnetz 5 bezogene elektrische Energie. Der erwartete Preis P kann auch von der momentan bezogenen elektrischen Leistung abhängen. Beispielsweise kann es sein, dass der Preis pro MWh bezogenen Strom ab Überschreitung eines bestimmten Schwellenwertes umso höher ist, je höher die bezogene Leistung ist.

Gegebenenfalls können der Produktionsplan PP und die Daten D für den Preis P der Steuereinrichtung 6 in den Schritten S2 und S3 zunächst für unterschiedliche Zeithorizonte bekannt werden. In diesem Fall ist der Prognosehorizont PH durch den kleineren der beiden Zeithorizonte bestimmt.

In einem Schritt S4 setzt die Steuereinrichtung 6 für den Prognosehorizont PH eine Betriebsweise B für das Gesamtsystem an. Die Betriebsweise B umfasst - analog zum aktuellen Zustand Z - für die Teilsysteme 1, 2, usw. jeweils eine Teilbetriebsweise B1, B2, usw. Die Teilbetriebsweisen B1, B2, usw. definieren für jeden Zeitpunkt, wie das jeweilige Teilsystem 1, 2, usw. betrieben (= gesteuert) wird. Die Teilbetriebsweisen B1, B2, usw. können sekundengenau zeitaufgelöst sein. Die angesetzten Betriebsweisen B, B1, B2, usw. sind vorerst nur vorläufig.

Die Teilbetriebsweise B1 für die Elektrolyseanlage 1 - nachfolgend auch als Anlagenbetriebsweise B1 bezeichnet - wird von der Steuereinrichtung 6 derart festgelegt, dass die Vorgaben des Produktionsplans PP erfüllt werden. Je nach Ausgestaltung der Elektrolyseanlage 1 kann die Anlagenbetriebsweise B1 beispielsweise umfassen:
- eine Betriebsspannung der Elektrolyseanlage 1,
- einen Strom der Elektrolyseanlage 1,
- eine Temperatur der Elektrolyseanlage 1,
- Fördergeschwindigkeiten für Medien der Elektrolyseanlage 1,
- ...

Die Steuereinrichtung 6 muss bei der Festlegung der Anlagenbetriebsweise B1 beachten, dass der Bedarf anderer Teilsysteme des Gesamtsystems an Wasserstoff gedeckt wird, der Füllgrad des Wasserstoffspeichers 3 nicht unter 0 % fällt und nicht über 100 % steigt und im übrigen die Auslegungsgrenzen der Elektrolyseanlage 1 beachtet werden.

Je nach Lage des Einzelfalls kann ein mehr oder minder gleichmäßiger Betrieb der Elektrolyseanlage 1 sinnvoll sein. Es kann aber auch sinnvoll sein, den Betrieb der Elektrolyseanlage 1 zeitlich zu variieren, da die Kosten für die elektrische Energie oftmals stark schwanken.

Die Teilbetriebsweise B2 für den Energiespeicher 2 - nachfolgend auch als Speicherbetriebsweise B2 bezeichnet - kann von der Steuereinrichtung 6 eigenständig und oftmals relativ flexibel festgelegt werden. Die Steuereinrichtung 6 muss jedoch beachten, dass der Ladezustand des Energiespeichers 2 nicht unter 0 % fällt und nicht über 100 % steigt und im übrigen die Auslegungsgrenzen der Energiespeichers 2 (beispielsweise der maximale Ladestrom und der maximale Entladestrom) eingehalten werden.

Die Teilbetriebsweise für den Wasserstoffspeicher 3 - nachfolgend auch als Wasserstoffspeicherbetriebsweise bezeichnet - kann von der Steuereinrichtung 6 oftmals nicht frei festgelegt werden. Vielmehr ist sie durch die Anlagenbetriebsweise B1 und die Betriebsweisen der Wasserstoff verbrauchenden Teilsysteme festgelegt. Der Wasserstoffspeicher 3 ermöglicht jedoch zumindest in gewissem Umfang die Entkopplung des Betriebs der Elektrolyseanlage 1 und der Wasserstoff verbrauchenden Teilsysteme voneinander und damit den flexiblen Betrieb der Elektrolyseanlage 1.

In einem Schritt S5 ermittelt die Steuereinrichtung 6 für das Ende des Prognosehorizonts PH einen erwarteten finalen Gesamtzustand Z'. Der erwartete finale Gesamtzustand Z' umfasst - analog zum aktuellen Zustand Z - für die Teilsysteme 1, 2, usw. jeweils einen erwarteten finalen Teilzustand Z1', Z2' usw. Die Ermittlung des jeweiligen erwarteten finalen Teilzustands Z1', Z2', usw. erfolgt unter Verwertung des jeweiligen aktuellen Teilzustands Z1, Z2, usw. und der jeweiligen Teilbetriebsweise B1, B2, usw. Konkret ermittelt die Steuereinrichtung 6 den jeweiligen erwarteten finalen Teilzustand Z1', Z2', usw. durch Fortschreibung des jeweiligen aktuellen Teilzustands Z1, Z2, usw. anhand der jeweiligen Teilbetriebsweise B1, B2, usw.

In einem Schritt S6 ermittelt die Steuereinrichtung 6 den Wert einer Kostenfunktion K. In die Kostenfunktion K können verschiedene Kostenfaktoren eingehen. Die Kostenfunktion K ist als gewichtete oder ungewichtete Summe der einzelnen Kostenfaktoren definiert. Als Kostenfaktoren kommen beispielsweise die Kosten für den Bezug elektrischer Energie aus dem Versorgungsnetz 5, die Betriebsweisen B1, B2, usw. der Teilsysteme 1, 2, usw., Bewertungen der erwarteten finalen Zustände Z1', Z2' usw. und eine Produktivität der Elektrolyseanlage 1 in Frage.

Zur Ermittlung der Kosten für den Bezug elektrischer Energie aus dem Versorgungsnetz 5 kann die Steuereinrichtung 6 beispielsweise anhand der ermittelten Teilbetriebsweisen B1, B2, usw. den Bezug an elektrischer Energie aus dem Versorgungsnetz 5 und hierauf aufbauend in Verbindung mit dem bekannten Preis P die zugehörigen Kosten ermitteln. Die Ermittlung kann mit derselben Zeitauflösung erfolgen, mit der auch die Teilbetriebsweisen B1, B2, usw. bestimmt sind, beispielsweise sekundengenau. Die Ermittlung kann auch mit einer gröberen Zeitauflösung erfolgen, beispielsweise mit einer Auflösung von 1 Minuten oder 15 Minuten. Auch ist es möglich, zwar zunächst mit einer hohen zeitlichen Auflösung zu arbeiten, beispielsweise sekundengenau, hierauf aufbauend jedoch für größere Zeiträume (beispielsweise 1 Minute, 5 Minuten, 15 Minuten) statistische Auswertungen vorzunehmen, beispielsweise Mittelwerte, maximale Werte, minimale Werte, Streuungen usw. zu ermitteln. Bei den Kosten kann insbesondere auch die Effizienz der Umrichtereinheit 4 mit berücksichtigt werden, wobei die Effizienz der Umrichtereinheit 4 auch vom Betriebszustand der Umrichtereinheit 4 abhängen kann.

Die Anlagenbetriebsweise B1 kann beispielsweise im Sinne der Produktivität, eines ressourcenschonenden Betriebs, einer Bewertung des Verschleißes der Elektrolyseanlage 1 usw. bewertet werden. Auch kann mit bewertet werden, dass beispielsweise bei einer Leistungsreduktion oftmals in stärkerem Umfang Verunreinigungen des Wasserstoffs anfallen.

Die Elektrolyseanlage 1 weist - in einer Kombination von elektrischen Serien- und Parallelschaltungen - eine Vielzahl von Elektrolysezellen (= kleinstmögliche Einheit) auf. Die Produktion an Wasserstoff einer jeweiligen Elektrolysezelle ist im wesentlichen proportional zum fließenden Strom. Die über einer einzelnen Elektrolysezelle abfallende Spannung ist eine Funktion des Stroms. Die Spannung kann zusätzlich von der Temperatur der Elektrolyseflüssigkeit und dem Verschleiß einer Membran der jeweiligen Elektrolysezelle abhängen. Die Effizienz, mit der eine jeweilige Elektrolysezelle arbeitet, korrespondiert im wesentlichen mit der über der jeweiligen Elektrolysezelle abfallenden Spannung. Der Verschleiß wiederum ist abhängig von der Temperatur und dem Strom. Auch ein aufgrund einer Änderung des Betriebs der jeweiligen Elektrolysezelle auftretender Verschleiß kann ermittelt und berücksichtigt werden. Weiterhin ist auch die Verunreinigung des erzeugten Wasserstoffs insbesondere eine Funktion des Stromes. Nach Bedarf können entweder die Verunreinigung des Wasserstoffs als solche oder der Aufwand zum Reinigen des Wasserstoffs mit entsprechenden Kosten bewertet werden.

Die Kosten für den Betrieb einer einzelnen Elektrolysezelle können damit bewertet werden. Die Bewertung kann beispielsweise die Kosten für den Verbrauch und die Alterung des Elektrolyten und den Verschleiß an den Elektroden und der Membran der Elektrolysezelle umfassen. Eventuell kann auch ein Stromripple mit berücksichtigt werden. Auch können die Kosten einer stromlosen (nicht betriebenen) Elektrolysezelle bewertet werden. Die Kosten für den Betrieb der Elektrolyseanlage 1 ergeben sich durch die Summe über alle Elektrolysezellen der Elektrolyseanlage 1.

Eine ähnliche Bewertung ist auch für die Speicherbetriebsweise B2 möglich. Insbesondere weist der Energiespeicher 2 - in einer Kombination von elektrischen Serien- und Parallelschaltungen - eine Vielzahl von Batteriezellen (= kleinstmögliche Einheit) auf. Die Spannung einer einzelnen Batteriezelle ist von der Ladung der jeweiligen Batteriezelle und - wegen des Innenwiderstands - von dem Strom durch die jeweilige Batteriezelle abhängig. Der Ladezustand der jeweiligen Batteriezelle ergibt sich, ausgehend von einem bekannten Anfangswert, durch Integration über den Strom. Der Innenwiderstand kann beispielsweise von der Temperatur und dem Verschleiß der jeweiligen Batteriezelle abhängen, gegebenenfalls auch vom Ladezustand. Der Verschleiß ist ebenfalls abhängig vom Strom durch die jeweilige Batteriezelle und vom Ladezustand der jeweiligen Batteriezelle abhängig. Gegebenenfalls kann auch eine Abhängigkeit von weiteren Größen bestehen, beispielsweise vom bereits vorhandenen Verschleiß oder von der Temperatur. Es ist möglich, dass eine Alterung und damit auch ein Verschleiß einer Batteriezelle auch dann auftreten, wenn kein Strom fließt. Besonders groß ist in diesem Fall dieser Verschleiß, wenn Ladezustände unterhalb einer Untergrenze (beispielsweise 25 %) oder oberhalb einer Obergrenze (beispielsweise 75 %) auftreten. Zwischen der Untergrenze und der Obergrenze tritt ohne Strom hingegen kein oder nahezu kein Verschleiß auf. Auch ein tiefes Entladen und dann insbesondere weiteres Entladen mit hohem Strom verursacht einen überproportional hohen Verschleiß.

Die Kosten für den Betrieb einer einzelnen Batteriezelle können damit bewertet werden. Die Bewertung kann insbesondere die Kosten für die Alterung umfassen. Eventuell kann auch ein Stromripple mit berücksichtigt werden. Auch können die Kosten einer stromlosen (nicht betriebenen) Batteriezelle bewertet werden. Die Kosten für den Betrieb des Energiespeichers 2 ergeben sich durch die Summe über alle Batteriezellen des Energiespeichers 2.

Ähnliche Bewertungen sind auch für weitere Betriebsweisen möglich, beispielsweise die Betriebsweise des Wasserstoffspeichers 3. Insbesondere der Wasserstoffspeicher 3 benötigt jedoch in der Regel relativ wenig Energie, so dass der Energiebedarf gegebenenfalls auch vernachlässigt werden kann oder nur berücksichtigt werden muss, wenn integral - über alle elektrische Energie verbrauchenden Teilsysteme gesehen - Leistungsgrenzen überschritten werden. Bei der Betriebsweise des Wasserstoffspeichers 3 gehen in die Kostenfunktion K jedoch vorzugsweise Verluste an im Wasserstoffspeicher 3 befindlichem Wasserstoff ein. Denn derartige Verluste - die natürlich Kosten verursachen - sind nicht ohne weiteres vernachlässigbar. Sie können, bezogen auf einen Tag, im Bereich von bis zu 0,5 % der in dem Wasserstoffspeicher 3 gespeicherten Menge an Wasserstoff liegen.

Die Bewertung des erwarteten finalen Anlagenzustands Z1' kann einen Anteil umfassen, der beispielsweise unter Verwertung eines energetischen Zustands der Elektrolyseanlage 1 ermittelt wird. Dadurch ist die Steuereinrichtung 6 in der Lage, die Bewertung des erwarteten finalen Anlagenzustands Z1' unter Berücksichtigung einer Energiemenge zu ermitteln, die beim späteren Betrieb der Elektrolyseanlage 1 über den Prognosehorizont PH hinaus aufgebracht werden muss, beispielsweise um die Elektrolyseanlage 1 wieder auf ihre Betriebstemperatur aufzuheizen. Auch können in die Bewertung Konzentrationen an Elektrolytflüssigkeiten eingehen.

Die Bewertung des erwarteten finalen Speicherzustands Z2' kann einen Anteil umfassen, mit dem der durch den Betrieb des Energiespeichers 2 angefallene Verschleiß berücksichtigt wird, also die Kosten durch den Verschleiß, der während des Produktionshorizonts PH aufgrund der Speicherbetriebsweise B2 auftritt.

Die Bewertung der Produktivität der Elektrolyseanlage 1 ist meist relativ einfach. Sie ist in der Regel umso besser (das heißt der entsprechende Kostenfaktor umso kleiner), je größer die Menge an Wasserstoff ist, die in einer bestimmten Zeiteinheit erzeugt wird. Im einfachsten Fall ist der entsprechende Kostenfaktor proportional zu der Zeit, die für die Produktion einer zuvor einmalig festgelegten Menge an Wasserstoff erforderlich ist.

In die Kostenfunktion K können auch noch weitere Kostenfaktoren eingehen. Nachfolgend wird beispielhaft auf einige mögliche weitere Kostenfaktoren eingegangen.

So kann beispielsweise ein Kostenfaktor berücksichtigt werden, der für die Kosten für den Betrieb weiterer Teilsysteme steht, also die Kosten, die sich für den betrachteten Prognosehorizont PH ergeben, aber ohne Berücksichtigung der Kosten für die elektrische Energie. Die Kosten für den Betrieb der weiteren Teilsysteme können beispielsweise die Kosten für benötigte Einsatzstoffe wie Ausgangsmaterialien und Prozessmedien oder die Kosten für die Aufbereitung von Prozessmedien oder Kosten aufgrund von Umweltbelastungen umfassen. Der Kostenfaktor für den Betrieb der weiteren Teilsysteme kann weiterhin Abschreibungen umfassen.

In analoger Weise können auch Kostenfaktoren berücksichtigt werden, die für die Kosten für den sonstigen Betrieb der Elektrolyseanlage 1, des Energiespeichers 2 und des Wasserstoffspeichers 3 stehen.

Weiterhin können auch andere Kosten des Gesamtsystems berücksichtigt werden, sofern derartige Kosten anfallen. Beispiele derartiger Kosten sind Umweltabgaben oder staatliche Förderungen.

In die Kostenfunktion K gehen somit im Ergebnis alle freien Steuervariablen für alle Teilsysteme 1, 2, usw. ein.

In einem Schritt S7 löst die Steuereinrichtung 6 ein Optimierungsproblem. Die Lösung des Optimierungsproblems ist die Kombination derjenigen Teilbetriebsweisen B1, B2, usw. - jeweils betrachtet über den Produktionshorizont PH -, bei der die Kostenfunktion K insgesamt minimal ist. Die Kostenfunktion K ist somit ein Funktional, das minimiert werden soll und auf Basis eines Anfangswertproblems mit Randbedingungen berechnet wird. Im Rahmen des Lösen des Optimierungsproblems variiert die Steuereinrichtung 6 für den Prognosehorizont PH die angesetzten Teilbetriebsweisen B1, B2, usw. Das Variieren erfolgt unter Berücksichtigung des Produktionsplans PP.

Beim Variieren der Betriebsweisen AB, SB kann die Steuereinrichtung 10 zusätzlich auch weitere Bedingungen berücksichtigen. Beispiele derartiger Bedingungen können beispielsweise Leistungsgrenzen der Anlage 1 und des Energiespeichers 2 sein, beispielsweise für den Energiespeicher 9 ein minimal zulässiger und ein maximal zulässiger Ladezustand, ein maximal zulässiger Ladestrom und ein maximal zulässiger Entladestrom. Auch andere Bedingungen sind möglich, beispielsweise gewisse Vorgaben für die erwarteten finalen Zustände Z1', Z2', usw. Auch kann gefordert sein, dass keine Energie in das Versorgungsnetz 5 eingespeist wird oder dass die aus dem Versorgungsnetz 5 bezogene Energie einen vorgegebenen Maximalwert nicht übersteigt. Der erwartete finale Zustand Z2' für den Energiespeicher 2 kann beispielsweise - sei es als punktueller Wert, sei es als Rahmenvorgabe - einen Ladezustand des Energiespeichers 2 umfassen, der am Ende des Prognosehorizonts PH erfüllt sein muss. Die Berücksichtigung derartiger Bedingungen kann insbesondere durch sogenannte Ungleichungsnebenbedingungen erfolgen. Auch kann die Steuereinrichtung 6 beim Variieren der Teilbetriebsweisen B1, B2, usw. einen mittleren Ladezustand des elektrischen Energiespeichers 2 mit berücksichtigen. Die Berücksichtigung kann dadurch erfolgen, dass Abweichungen von dem mittleren Ladezustand mit - wenn auch relativ geringen - Faktoren gewichtet in die Kostenfunktion K eingehen und so "bestraft" werden.

Falls der Wasserstoffspeicher 3 vorhanden ist, gelten analoge Ausführungen für den Wasserstoffspeicher 3.

Optimierungsprobleme als solche, deren Ansatz und Vorgehensweisen zum Lösen derartiger Optimierungsprobleme sind Fachleuten bekannt. Sie werden auch im eingangs genannten Stand der Technik vom Ansatz her so ergriffen.

Mit der Ausführung des Schrittes S7 stehen die variierten und dadurch optimierten Teilbetriebsweisen B1, B2, usw. fest. Die Steuereinrichtung 6 kann daher in einem Schritt S8 die Teilsysteme 1, 2, usw. gemäß der variierten Teilbetriebsweisen B1, B2, usw. betreiben. Dies erfolgt zunächst für den Beginn des Prognosehorizonts PH.

In einem Schritt S9 prüft die Steuereinrichtung 6, ob ihr neue Informationen zur Verfügung stehen. Wenn dies nicht der Fall ist, geht die Steuereinrichtung 6 zum Schritt S8 zurück. Bei der erneuten Ausführung des Schrittes S8 betreibt die Steuereinrichtung 6 die Teilsysteme 1, 2, usw. weiterhin gemäß der variierten Teilbetriebsweisen B1, B2, usw. Sie berücksichtigt dabei den Fortschritt in der Zeit t.

Wenn der Steuereinrichtung 6 neue Informationen zur Verfügung stehen, geht die Steuereinrichtung 6 zu einem Schritt S10 über. Im Schritt S10 prüft die Steuereinrichtung 6, ob die Information ein Befehl zum Beenden des Betriebs des Gesamtsystems ist. Wenn dies der Fall ist, beendet die Steuereinrichtung 6 in einem Schritt S11 den Betrieb des Gesamtsystems. Anderenfalls geht die Steuereinrichtung 6 zum Schritt S1 zurück. Je nach Art der neuen Informationen kann die Steuereinrichtung 6 alternativ auch zum Schritt S2 oder zum Schritt S3 zurückgehen.

Im Ergebnis wird durch die Vorgehensweise gemäß FIG 2 die Ermittlung der Teilbetriebsweisen B1, B2, immer wieder mit einem bestimmten Prognosehorizont PH wiederholt. Die Ermittlung wird also im Sinne einer permanenten Vorhersage ausgeführt und laufend an den erwarteten Preis P und den Produktionsplan PP angepasst.

Zur Ermittlung des Kostenfaktors für den Betrieb der Elektrolyseanlage 1 und der Bewertung des erwarteten finalen Anlagenzustands Z1' implementiert die Steuereinrichtung 6 ein Modell der Elektrolyseanlage 1. Das Modell der Elektrolyseanlage 1 modelliert die Energieeffizienz und den Verschleiß der Elektrolyseanlage 1. Der ermittelte Verschleiß ergibt sich in Abhängigkeit von dem geplanten Betrieb der Elektrolyseanlage 1. Der Verschleiß kann insbesondere in nichtlinearer Weise von der Anlagenbetriebsweise B1 abhängen. Die Bewertung des erwarteten finalen Anlagenzustands Z1' kann beispielsweise von für das Ende des Prognosehorizonts PH erwarteten Konzentrationen von Prozessmedien (insbesondere Elektrolyten) und der Temperatur der Elektrolyseanlage 1 abhängen. Auch eine Abhängigkeit vom Verschleiß kann bestehen. Die Ermittlung des Kostenfaktors für den Betrieb des Energiespeichers 2 und der Bewertung des erwarteten finalen Speicherzustands Z2' kann auf analoge Art und Weise erfolgen.

Für die Ermittlung der beiden Kostenfaktoren sind der Steuereinrichtung 6 für die Elektrolyseanlage 1 und den elektrischen Energiespeicher 2 der Wirkungsgrad, gegebenenfalls in Abhängigkeit vom Betriebszustand, die maximale Kapazität und die maximal mögliche Änderungsgeschwindigkeit des Betriebs der Elektrolyseanlage 1 bzw. des elektrischen Energiespeichers 2 bekannt. Diese Sachverhalte werden im Rahmen des jeweiligen Modells mit verwertet.

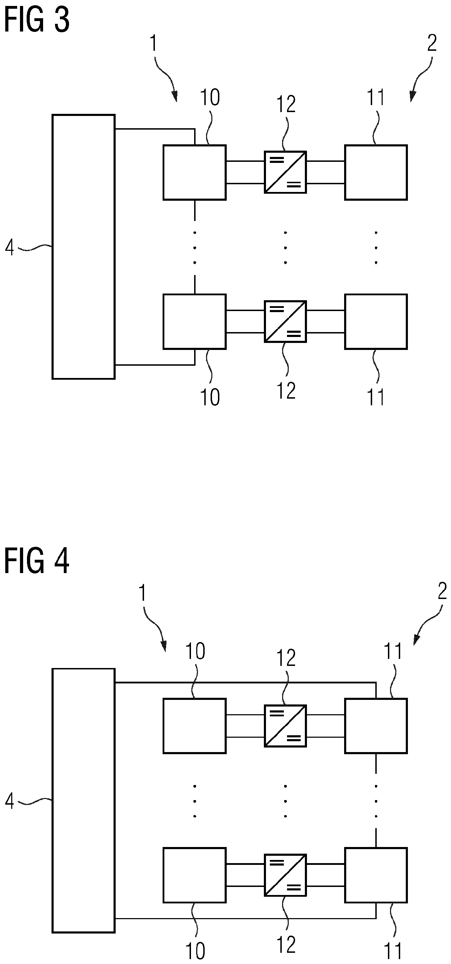

Nachfolgend werden in Verbindung mit den FIG 3 und 4 zwei besonders bevorzugte Ausgestaltungen der beiden grundlegenden Teilsysteme 1, 2 erläutert, also der Elektrolyseanlage 1 und des Energiespeichers 2. Bei den Ausgestaltungen gemäß den FIG 3 und 4 sind die Elektrolyseanlage 1 und der Energiespeicher 2, soweit es die elektrische Verschaltung betrifft, ineinander integriert.

Konkret weist die Elektrolyseanlage 1 gemäß den FIG 3 und 4 mehrere Elektrolysenblöcke 10 auf. Weiterhin weist der Energiespeicher 2 mehrere Batteriemodule 11 auf. Die Batteriemodule 11 sind über eine jeweilige Wandlerschaltung 12 mit je einem der Elektrolysenblöcke 10 verbunden. Die Anzahl an Elektrolysenblöcken 10 kann nach Bedarf bestimmt sein. Beispielsweise kann sie bei 10, 15, 20, 50 oder 100 liegen. Auch andere Anzahlen sind möglich, sei es unterhalb von 10, sei es oberhalb von 100, sei es zwischen 10 und 100. In der Regel wird die Anzahl an Elektrolysenblöcken 10 jedoch zwischen 10 und 30 liegen. Unabhängig von der Anzahl an Elektrolysenblöcken 10 ist aber stets auch die gleiche Anzahl an Batteriemodulen 11 und an Wandlerschaltungen 12 vorhanden, so dass jeweils genau diese Anzahl an Gruppen, bestehend jeweils aus einem (1) Elektrolysenblock 10, einem (1) Batteriemodul 11 und einer (1) Wandlerschaltung 12, gebildet werden kann.

Bei der Ausgestaltung gemäß FIG 3 bilden die Elektrolysenblöcke 10 eine (elektrische) Reihenschaltung, die über die Umrichtereinheit 4 mit dem Versorgungsnetz 5 verbunden ist. Die Batteriemodule 11 sind bei der Ausgestaltung gemäß FIG 3 somit sozusagen Anhängsel des jeweiligen Elektrolysenblocks 10. Bei der Ausgestaltung gemäß FIG 4 ist es umgekehrt. Hier bilden die Batteriemodule 11 eine (elektrische) Reihenschaltung, die über die Umrichtereinheit 4 mit dem Versorgungsnetz 5 verbunden ist. Bei der Ausgestaltung gemäß FIG 4 sind somit die Elektrolysenblöcke 10 sozusagen Anhängsel des jeweiligen Batteriemoduls 11.

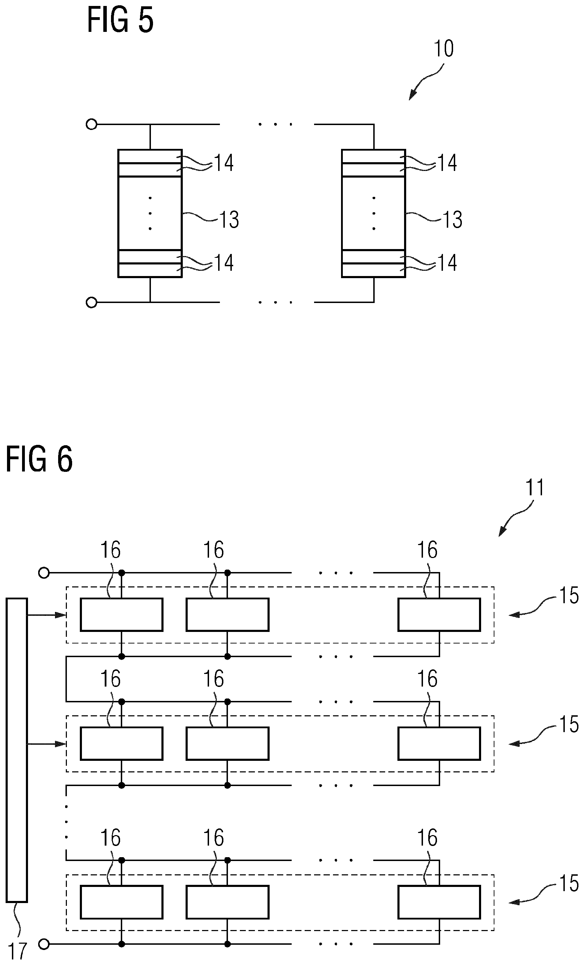

Die Elektrolysenblöcke 10 sind gemäß FIG 5 jeweils als Parallelschaltung einer Anzahl von Elektrolysensträngen 13 ausgebildet. Die Anzahl an Elektrolysensträngen 13 pro Elektrolysenblock 10 kann bei (nur) 1 liegen. In diesem Fall ist die Parallelschaltung entartet. Oftmals weisen die Elektrolysenblöcke 10 jedoch jeweils mehrere Elektrolysenstränge 13 auf, so dass eine echte Parallelschaltung existiert. In der Regel ist die Anzahl an Elektrolysensträngen 13 pro Elektrolysenblock 10 für alle Elektrolysenblöcke 10 die gleiche. In der Regel wird die Anzahl an Elektrolysensträngen 13 pro Elektrolysenblock 10 zwischen 10 und 30 liegen.

Unabhängig von der Anzahl an Elektrolysensträngen 13 sind die Elektrolysenstränge 13 gemäß FIG 5 ihrerseits jeweils als Reihenschaltung mehrerer Elektrolysezellen 14 ausgebildet. Die Elektrolysezellen 14 des jeweiligen Elektrolysenstrangs 13 sind sowohl elektrisch als auch mechanisch und fluidtechnisch hintereinander angeordnet. Eine einzelne Elektrolysezelle 14 ist die kleinstmögliche Baueinheit. Sie ist insbesondere durch ihre elektrochemische Betriebsspannung charakterisiert, die meist im unteren einstelligen Voltbereich liegt, beispielsweise zwischen 1,5 V und 2,0 V.

Die Anzahl an Elektrolysezellen 14 pro Elektrolysenstrang 13 kann nach Bedarf bestimmt sein. Beispielsweise kann sie bei 50, 80, 100, 120, 150 oder 200 Elektrolysezellen 14 liegen. Auch andere Anzahlen sind möglich, sei es unterhalb von 50, sei es oberhalb von 200, sei es zwischen 50 und 200. Innerhalb des jeweiligen Elektrolysenblocks 10 ist die Anzahl an Elektrolysezellen 14 pro Elektrolysenstrang 13 einheitlich dieselbe. Von Elektrolysenblock 10 zu Elektrolysenblock 10 kann sie variieren. In der Regel wird die Anzahl an Elektrolysezellen 14 pro Elektrolysenstrang 13 jedoch zwischen 50 und 250 liegen, insbesondere zwischen 100 und 200.

Das Produkt der Anzahl an Elektrolysenblöcken 10 und der Anzahl an Elektrolysezellen 14 pro Elektrolysenstrang 13 liegt oftmals im Bereich zwischen 500 und 3000, insbesondere zwischen 1000 und 2000.

Es ist möglich, dass auf das Innere der Elektrolysenblöcke 10 oder der Elektrolysenstränge 13 nicht ohne weiteres zugegriffen werden kann. Beispielsweise können die Elektrolysenblöcke 10 oder die Elektrolysenstränge 13 über eine massive stählerne Außenhülle verfügen, so dass nur noch elektrische Anschlüsse für Strom und Sensoren sowie Zugänge und Abgänge für den Elektrolyten und produzierte Gase zugänglich sind. Aufgrund der Anordnung in der Außenhülle kann die Elektrolyse unter Druck erfolgen, so dass beispielsweise Energie für eine nachfolgende Kompression des Wasserstoffs eingespart werden kann. Anderenfalls wäre diese Energie beispielsweise zum Einspeichern des Wasserstoffs in den Wasserstoffspeicher 3 erforderlich.

In ähnlicher Weise weisen die Batteriemodule 11 gemäß FIG 6 jeweils eine Reihenschaltung von mehreren Batterieblöcken 15 auf. Die Anzahl an Batterieblöcken 15 pro Batteriemodul 11 kann nach Bedarf bestimmt sein. Beispielsweise kann sie bei 50, 80, 100, 120, 150 oder 200 Batterieblöcken 15 liegen. Auch andere Anzahlen sind möglich, sei es unterhalb von 50, sei es oberhalb von 200, sei es zwischen 50 und 200. Die Anzahl an Batterieblöcken 15 ist oftmals für alle Batteriemodule 11 dieselbe. Dies ist jedoch nicht zwingend. Vielmehr kann die Anzahl an Batterieblöcken 15 von Batteriemodul 11 zu Batteriemodul 11 variieren. In der Regel wird die Anzahl an Batterieblöcken 15 pro Batteriemodul 11 jedoch zwischen 50 und 250 liegen, insbesondere zwischen 100 und 200.

Die Batterieblöcke 15 wiederum weisen eine Parallelschaltung einer Anzahl von Batteriezellen 16 auf. Die Anzahl an Batteriezellen 16 pro Batterieblock 15 kann bei (nur) 1 liegen. In diesem Fall ist die Parallelschaltung entartet. Oftmals weisen die Batterieblöcke 15 jedoch jeweils mehrere Batteriezellen 16 auf, so dass eine echte Parallelschaltung existiert. In der Regel ist die Anzahl an Batteriezellen 16 pro Batterieblock 15 für alle Batterieblöcke 15 die gleiche. In der Regel wird die Anzahl an Batteriezellen 16 pro Batterieblock 15 jedoch zwischen 50 und 500 liegen, insbesondere zwischen 100 und 400.

Eine einzelne Batteriezelle 16 ist die kleinstmögliche Baueinheit. Sie ist insbesondere durch ihre elektrochemische Betriebsspannung charakterisiert, die meist ebenfalls im unteren einstelligen Voltbereich liegt, beispielsweise zwischen 1,2 V und 5,0 V, insbesondere bei einer Li-Zelle zwischen 3,2 V und 4,2 V.

In der Regel weisen die Batteriemodule 11 jeweils eine Balancierschaltung 17 auf. Die jeweilige Balancierschaltung 17 bewirkt innerhalb der in Reihe geschalteten Batterieblöcke 15 des jeweiligen Batteriemoduls 11 einen Ausgleich der Ladezustände der Batterieblöcke 15 des jeweiligen Batteriemoduls 11. Balancierschaltungen 17 sind als solche bekannt.

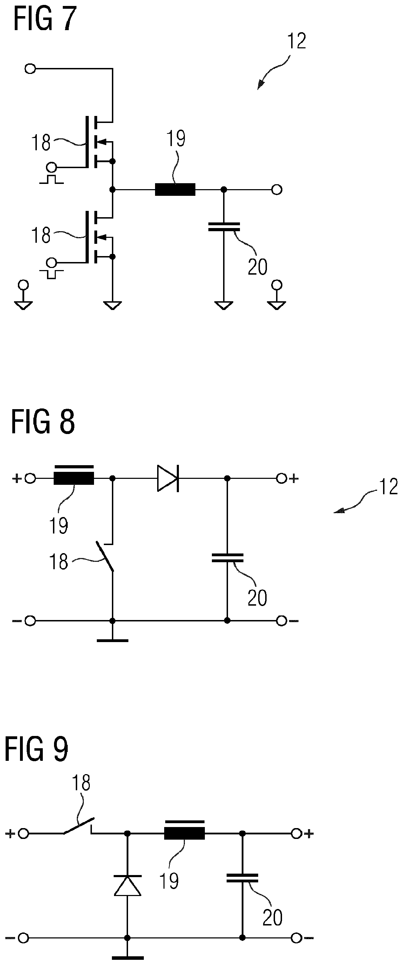

Die Wandlerschaltungen 12 können nach Bedarf ausgebildet sein. Beispielsweise können die Wandlerschaltungen 12 entsprechend der Darstellung in FIG 7 als Synchronwandler ausgebildet sein. In diesem Fall umfasst die jeweilige Wandlerschaltung 12 zwei elektronische Schaltelemente 18 (gemäß der Darstellung in FIG 7 MOSFETs, es sind aber auch andere Halbleiterschalter möglich) und eine Drossel 19. Der in FIG 7 mit dargestellte Kondensator 20 ist oftmals vorhanden, aber nicht zwingend. Alternativ können die Wandlerschaltungen 12 entsprechend den Darstellungen in den FIG 8 und 9 als Aufwärtswandler oder als Abwärtswandler ausgebildet. In der Regel sind die Wandlerschaltungen 12 einheitlich ausgebildet.

Bei einer Ausgestaltung der Wandlerschaltungen 12 als Synchronwandler ist in der Regel die Einheit mit der höheren Betriebsspannung eingangsseitig der jeweiligen Wandlerschaltung 12 angeordnet. Dies kann je nach Auslegung der Elektrolysenblöcke 10 und der Batteriemodule 11 entweder der jeweilige Elektrolysenblock 10 oder das jeweilige Batteriemodul 11 sein. Bei einer Ausgestaltung der Wandlerschaltungen 12 als Aufwärtswandler oder Abwärtswandler ist die Richtung des Energieflusses festgelegt. In diesem Fall muss stets das jeweilige Batteriemodul 11 eingangsseitig der jeweiligen Wandlerschaltung 12 angeordnet sein. Die Ausgestaltungen der Wandlereinrichtungen 12 als Aufwärtswandler oder Abwärtswandler ist insbesondere bei der Ausgestaltung gemäß FIG 4 möglich.

Bei den Ausgestaltungen gemäß den FIG 3 und 4 gibt es - bei n Gruppen, die jeweils aus einem (1) Elektrolysenblock 10, einem (1) Batteriemodul 11 und einer (1) Wandlerschaltung 12 bestehen, n+1 einzustellende Steuergrößen. Eine der Steuergrößen ist die Betriebsweise der Umrichtereinheit 4. Deren Ansteuerung legt fest, in welchem Ausmaß der Elektrolyseanlage 1 und dem Energiespeicher 2 insgesamt Energie zugeführt wird (wobei dieser Wert kurzzeitig auch negativ sein kann). Die anderen n Steuergrößen sind die Betriebsweisen der Wandlerschaltungen 12, insbesondere deren Pulsweitenverhältnisse. Die Betriebsweisen der Wandlerschaltungen 12 legen fest, in welchem Ausmaß der von der Umrichtereinheit 4 abgegebene Strom auf den jeweiligen Elektrolysenblock 10 und das jeweilige Batteriemodul 11 aufgeteilt wird. Die Aufteilung kann einheitlich für die n Gruppen einheitlich dieselbe sein. Dies ist aber nicht zwingend erforderlich. In jedem Fall sollen die Umrichtereinheit 4 und die Wandlerschaltungen 12 so angesteuert werden, dass an der aus der Elektrolyseanlage 1 und dem Energiespeicher 2 bestehenden Einheit eine bestimmte Spannung anliegt und die Ströme der Batteriemodule 11 bestimmte Werte aufweisen.

Es ist möglich, einen rein gesteuerten Betrieb vorzusehen. Vorzugsweise werden jedoch die Spannungen und Ströme, soweit erforderlich, erfasst und in entsprechende Regelkreise für die Ermittlung der Ansteuerungen der Umrichtereinheit 4 und der Wandlerschaltungen 12 eingebunden.

Der erläuterte, ineinander verschachtelte Aufbau der Elektrolyseanlage 1 und des Energiespeichers 2 ist insbesondere deshalb von Vorteil, weil er modular ist. Wenn - beispielsweise - ein einzelner Elektrolysenblock 10 und/oder ein einzelnes Batteriemodul 11 und/oder eine einzelne Wandlerschaltung 12 gewartet, repariert oder ausgetauscht werden muss, so kann die entsprechende Gruppe über Schalteinrichtungen (nicht dargestellt) überbrückt werden. Die anderen Gruppen könnten hingegen weiter betrieben werden, wobei möglicherweise zwar die Ansteuerung der Umrichtereinheit 4 und/oder der verbleibenden Wandlerschaltungen 12 angepasst werden muss, oftmals jedoch unverändert oder nahezu unverändert beibehalten werden kann. Vor allem aber können die Elektrolyseanlage 1 und der Energiespeicher 2 insgesamt weiter betrieben werden.

Die vorliegende Erfindung weist viele Vorteile auf. Insbesondere ist eine umfassende Optimierung des Betriebs des Gesamtsystems, bestehend aus den Teilsystemen 1, 2, usw., möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektrolyseanlage
- 2: Energiespeicher
- 3: Wasserstoffspeicher
- 4: Umrichtereinheit
- 5: Versorgungsnetz
- 6: Steuereinrichtung
- 7: Steuerprogramm
- 8: Maschinencode
- 10: Elektrolysenblöcke
- 11: Batteriemodule
- 12: Wandlerschaltungen
- 13: Elektrolysenstränge
- 14: Elektrolysezellen
- 15: Batterieblöcke
- 16: Batteriezellen
- 17: Balancierschaltung
- 18: elektronische Schaltelemente
- 19: Drossel
- 20: Kondensator

- B, B1, B2: Betriebsweisen
- K: Kostenfunktion
- PH: Prognosehorizont
- PP: Produktionsplan
- S1 bis S11: Schritte
- t: Zeit
- Z, Z1, Z2: aktuelle Zustände
- Z', Z1', Z2': erwartete finale Zustände

## Patentansprüche

1. Betriebsverfahren für ein Gesamtsystem,
- wobei das Gesamtsystem als Teilsysteme eine Wasserstoff produzierende Elektrolyseanlage (1) und einen elektrischen Energiespeicher (2) umfasst,
- wobei die Elektrolyseanlage (1) und der elektrische Energiespeicher (2) zur Übertragung elektrischer Energie direkt oder indirekt miteinander und mit einem elektrischen Versorgungsnetz (5) verbunden sind,
- wobei einer das Gesamtsystem steuernden Steuereinrichtung (6) aktuelle Zustände (Z1, Z2) der Teilsysteme (1, 2) bekannt sind,
- wobei der Steuereinrichtung (6) für einen Prognosehorizont (PH) zumindest ein gewünschter Produktionsplan (PP) der Elektrolyseanlage (1) und mindestens ein erwarteter Preis (P) für aus dem Versorgungsnetz (5) bezogene elektrische Energie bekannt sind,
- wobei die Steuereinrichtung (6) für den Prognosehorizont (PH) Betriebsweisen (B1, B2) der Teilsysteme (1, 2) ansetzt und für das Ende des Prognosehorizonts (PH) erwartete finale Zustände (Z1', Z2') der Teilsysteme (1, 2) ermittelt,
- wobei die Steuereinrichtung (6) den erwarteten finalen Zustand (Z1', Z2') eines jeweiligen Teilsystems (1, 2) unter Verwertung des aktuellen Zustands (Z1, Z2) des jeweiligen Teilsystems (1, 2) und der für das jeweilige Teilsystem (1, 2) angesetzten Betriebsweise (B1, B2) ermittelt,
- wobei die Steuereinrichtung (6) für den Prognosehorizont (PH) die angesetzten Betriebsweisen (B1, B2) und hierauf aufbauend die erwarteten finalen Zustände (Z1', Z2') variiert, so dass eine Kostenfunktion (K) minimiert wird,
- wobei in die Kostenfunktion (K) die Kosten für den Bezug elektrischer Energie aus dem Versorgungsnetz (5), die Betriebsweisen (B1, B2) der Teilsysteme (1, 2), eine Bewertung der erwarteten finalen Zustände (Z1', Z2') der Teilsysteme (1, 2) und/oder eine Produktivität der Elektrolyseanlage (1) eingehen und
- wobei die Steuereinrichtung (6) die Teilsysteme (1, 2) zumindest für den Beginn des Prognosehorizonts (PH) gemäß der jeweiligen variierten Betriebsweise (B1, B2) betreibt.

2. Betriebsverfahren nach Anspruch 1,
**dadurch gekennzeichnet,**
**dass** das Gesamtsystem als weiteres Teilsystem einen Wasserstoffspeicher (3) umfasst und dass in die Kostenfunktion (K) Verluste an im Wasserstoffspeicher (3) befindlichem Wasserstoff eingehen.

3. Betriebsverfahren nach Anspruch 1 oder 2,
**dadurch gekennzeichnet,**
**dass** der aktuelle Zustand (Z1) und der erwartete finale Zustand (Z1') der Elektrolyseanlage (1) die Auslastung, die Temperatur und/oder den Verschleiß der Elektrolyseanlage (1) umfassen.

4. Betriebsverfahren nach Anspruch 1, 2 oder 3,
**dadurch gekennzeichnet,**
**dass** der aktuelle Zustand (Z2) und der erwartete finale Zustand (Z2') des elektrischen Energiespeichers (2) dessen Ladezustand, den Stromfluss, die Temperatur und/oder den Verschleiß des elektrischen Energiespeichers (2) umfassen.

5. Betriebsverfahren nach einem der obigen Ansprüche,
**dadurch gekennzeichnet,**
**dass** der Produktionsplan (PP) der Elektrolyseanlage (1) zumindest die Menge des zu produzierenden Wasserstoffs umfasst, vorzugsweise auch die Reinheit des zu produzierenden Wasserstoffs.

6. Betriebsverfahren nach einem der obigen Ansprüche,
**dadurch gekennzeichnet,**
**dass** die Steuereinrichtung (6) Modelle der Teilsysteme (1, 2) implementiert, dass die Modelle der Teilsysteme (1, 2) die Energieeffizienz und den Verschleiß des jeweiligen Teilsystems (1, 2) modellieren, insbesondere den durch den geplanten Betrieb des jeweiligen Teilsystems (1, 2) bewirkten Verschleiß des jeweiligen Teilsystems(1, 2), und dass die Steuereinrichtung (6) bei der Bewertung des erwarteten finalen Zustands (Z1', Z2') dieser Teilsysteme (1, 2) den durch den geplanten Betrieb des jeweiligen Teilsystems (1, 2) bewirkten Verschleiß berücksichtigt.

7. Betriebsverfahren nach einem der obigen Ansprüche,
**dadurch gekennzeichnet,**
**dass** der Steuereinrichtung (6) für die Teilsysteme (1, 2) der Wirkungsgrad, gegebenenfalls in Abhängigkeit vom Betriebszustand, die maximale Kapazität und die maximal mögliche Änderungsgeschwindigkeit des Betriebs bekannt sind.

8. Betriebsverfahren nach einem der obigen Ansprüche,
**dadurch gekennzeichnet,**
- **dass** die Elektrolyseanlage (1) mehrere Elektrolysenblöcke (10) aufweist,
- **dass** der elektrische Energiespeicher (2) mehrere Batteriemodule (11) aufweist,
- **dass** die Batteriemodule (11) über eine jeweilige Wandlerschaltung (12) mit je einem der Elektrolysenblöcke (10) verbunden sind und
- **dass** die Elektrolysenblöcke (10) oder die Batteriemodule (11) eine Reihenschaltung bilden, die über eine Umrichtereinheit (4) mit dem Versorgungsnetz (5) verbunden ist.

9. Betriebsverfahren nach Anspruch 8,
**dadurch gekennzeichnet,**
**dass** die Elektrolysenblöcke (10) jeweils als Parallelschaltung einer Anzahl von Elektrolysensträngen (13) ausgebildet sind, die ihrerseits jeweils als Reihenschaltung mehrerer Elektrolysezellen (14) ausgebildet sind.

10. Betriebsverfahren nach Anspruch 8 oder 9,
**dadurch gekennzeichnet,**
**dass** die Batteriemodule (11) jeweils eine Reihenschaltung von mehreren Batterieblöcken (15) aufweisen, die ihrerseits jeweils eine Parallelschaltung einer Anzahl von Batteriezellen (16) aufweisen.

11. Betriebsverfahren nach Anspruch 10,
**dadurch gekennzeichnet,**
**dass** die Batteriemodule (11) jeweils eine Balancierschaltung (17) aufweisen, die innerhalb der in Reihe geschalteten Batterieblöcke (15) des jeweiligen Batteriemoduls (11) einen Ausgleich der Ladezustände der Batterieblöcke (15) des jeweiligen Batteriemoduls (11) bewirkt.

12. Betriebsverfahren nach einem der Ansprüche 8 bis 11,
**dadurch gekennzeichnet,**
**dass** die Wandlerschaltungen (12) als Synchronwandler, als Aufwärtswandler oder als Abwärtswandler ausgebildet sind.

13. Steuerprogramm für eine Steuereinrichtung (6) für ein Gesamtsystem,
- wobei das Gesamtsystem als Teilsysteme eine Wasserstoff produzierende Elektrolyseanlage (1) und einen Energiespeicher (2) umfasst,
- wobei die Elektrolyseanlage (1) und der elektrische Energiespeicher (2) zur Übertragung elektrischer Energie direkt oder indirekt miteinander und mit einem elektrischen Versorgungsnetz (5) verbunden sind,
- wobei das Steuerprogramm Maschinencode (8) umfasst, der von der Steuereinrichtung (6) abarbeitbar ist,
- wobei die Abarbeitung des Maschinencodes (8) durch die Steuereinrichtung (6) bewirkt, dass die Steuereinrichtung (6) das Gesamtsystem gemäß einem Betriebsverfahren nach einem der obigen Ansprüche steuert.

14. Steuereinrichtung für ein Gesamtsystem,
- wobei das Gesamtsystem als Teilsysteme eine Wasserstoff produzierende Elektrolyseanlage (1) und einen Energiespeicher (2) umfasst,
- wobei die Elektrolyseanlage (1) und der elektrische Energiespeicher (2) zur Übertragung elektrischer Energie direkt oder indirekt miteinander und mit einem elektrischen Versorgungsnetz (5) verbunden sind,
- wobei die Steuereinrichtung mit einem Steuerprogramm (7) nach Anspruch 13 programmiert ist, so dass die Steuereinrichtung bei Abarbeitung des Maschinencodes (8) des Steuerprogramms (7) das Gesamtsystem gemäß einem Betriebsverfahren nach einem der Ansprüche 1 bis 12 steuert.

15. Gesamtsystem,
- wobei das Gesamtsystem als Teilsysteme eine Wasserstoff produzierende Elektrolyseanlage (1) und einen Energiespeicher (2) umfasst,
- wobei die Elektrolyseanlage (1) und der elektrische Energiespeicher (2) zur Übertragung elektrischer Energie direkt oder indirekt miteinander und mit einem elektrischen Versorgungsnetz (5) verbunden sind,
- wobei das Gesamtsystem eine Steuereinrichtung (6) nach Anspruch 14 umfasst, die bei Abarbeitung des Maschinencodes (8) eines Steuerprogramms (7) von Anspruch 13 das Gesamtsystem gemäß einem Betriebsverfahren nach einem der Ansprüche 1 bis 12 steuert.
